# EUROPEAN PATENT APPLICATION

(11) **EP 1 704 986 A2**
(43) Date of publication of application: **27.09.2006**
(21) Application number: 06005990.4
(22) Date of filing: 23.03.2006
(51) Int. Cl.: B29C 65/08, D06H 5/00

(54) **Method for manufacturing a seam connection between two textile sheet formations and ultrasonic welding device**

(30) Priority: 23.03.2005 CH 4982005
(71) Applicant: Jentschmann AG Zürich, CH-8902 Urdorf (CH)
(72) Inventor: Heil, Dietmar, 79802 Dettighofen (DE)
(74) Representative: Banzer, Hans-Jörg

(57) **Abstract**

A cover tape (17) is applied before welding onto the edge region of two subjects (11, 3) which are to be welded or bonded to one another by ultrasound. The cover tape (17) covers uncleanly cut edge regions (19), seals the seam and prevents the delamination with multi-layered material along the seam.

## Description

### BACKGROUND OF THE INVENTION

The subject-matter of the invention is a method for manufacturing a seam connection between two textile sheet by ultrasonic welding or ultrasonic bonding and an ultrasonic welding device.

Seam connections, in particular on textiles, may be produced by way of a thread seam or by way of a bonding seam or weld seam. With the present invention it is the case of the production of a weld seam or bonding seam, which is produced by an ultrasonic welding device. Ultrasonic welding devices for textile sheet formations or technical films are known. They comprise an anvil and a sonotrode. For the production of long or curved seam connections one uses rollers for the anvil as well as for the sonotrode, which may be pressed against one another by way of suitable means and with a suitable force.

In order to be able to produce and optically aesthetic seam formation, it is necessary to cut to size the edges of the textile sheet formation to be connected in a very exact manner, i.e. to avoid fibers projecting out of the edges of the sheet formation. In order to achieve this, the cut part of such a sheet formation may not be effected in a conventional manner by way of punching, but on cutting for example a suitable temperature increase at the cut edge must be simultaneously effected in order to seal this. This leads to the high cost of cut parts.

### SUMMARY OF THE INVENTION

It is the object of the present invention to provide a method with which conventional cut parts are sufficient in order, despite this, to produce clean undetachable seam connections.

A further object of the invention lies in providing a device for carrying out the method.

According to the present invention, these objects are achieved by a method as defined in claim 1 and an ultrasonic welding device as defined in claim 6. Furthermore, a textile sheet formation arrangement as defined in claim 8 is provided. The dependent claims define preferred embodiments of the invention.

By way of the simultaneous application of a tape which may be welded to the surfaces of the two textile sheet formations to be connected and which laterally overlaps the edge region of the seam, it is possible on the one hand to cover unclean cut edges and at the same time create a direct connection between the surfaces of the two textile sheet formations or films which are connected to one another by the seam. The seam may be designed in a waterproof manner depending on the material of the tape used for covering. If a tape is used whose color differs from the color of the textile sheet formation, then the seams may be optically emphasized. For invisible coverings, the tapes of the same material as the visible surfaces of the sheet formation may be used.

The cover tape may be simultaneously fed and welded to the surfaces with the device according to the invention for producing the connection seam between the textile sheet formations i.e. in the same working step and on a conventional welding device. As a result of this no additional working costs arise, and the positioning of the cover tape is effected in an extremely precise manner and parallel to the course of the edge regions of the seam.

### BRIEF DESCRIPTION OF THE DRAWINGS

The invention is explained in more detail by way of an illustrated embodiment example. There are shown in:
- Fig. 1: a perspective representation of an ultrasonic welding device (only anvil roller and sonotrode roller are shown),
- Fig. 2: a front view of the device according to Fig. 1,
- Figure 3: a lateral view of the device and
- Fig. 4: a cross section enlarged several times, through a connection seam of two multi-layered textile sheet formations with cover tapes deposited on both sides.

### DETAILED DESCRIPTION OF THE INVENTION

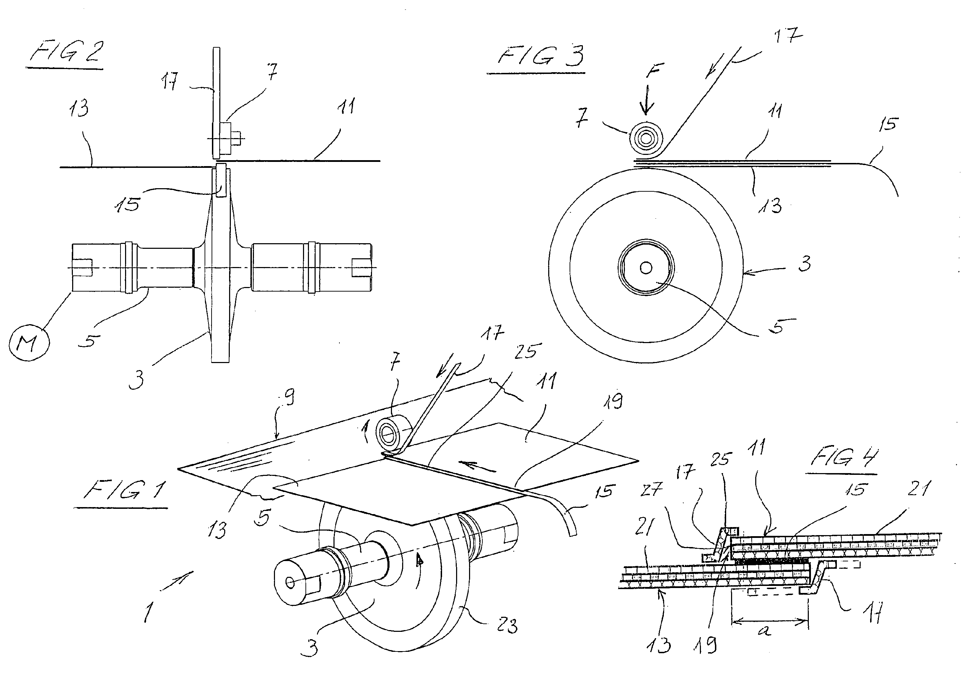

In Figure 1, which shows an ultrasonic welding device 1 only schematically and only with regard to those parts which are essential to the invention, a sonotrode roller 3 is visible at the bottom, which is seated on a drivable shaft mounted laterally of the sonotrode roller 3. The sound generator and the mounting of the sonotrode roller 3 have been omitted for the purpose of an improved overview. A drive motor is indicated at M. An anvil roller 7 is mounted on a shaft which is not shown, above the sonotrode roller 3. The anvil roller 7 is displaceably mounted in the vertical and is pressed with a settable force F against the sonotrode roller 3 by way of means which are not shown.

Two textile sheet formations, subjects 11, 13 for short, which are to be connected to one another lie on a table which is only indicated and provided with reference numeral 9, which forms a working and rest surface for the subjects 11, 13 and comprises a recess (not shown) which is in the region of the sonotrode roller 3 arranged below the table 9 and through which the apex of the sonotrode roller 3 projects into the plane of the table 9. The subjects 11, 13 overlap mutually by an amount a, e.g. 6 mm (cf. Figure 4) which is dimensioned in dependence on the subject property in order to ensure a permanent undetachable connection of the two subjects 11, 13. A bonding aid 15 may lie between the two subjects 11, 13 in the region of their overlapping, for example a tape which may be melted on by way of heat. Such a tape is optional and is applied when the materials of the two subjects 11, 13 have insufficient properties for a direct mutual welding by way of heat. The insertion of an adhesive aid 15 between the subjects 11, 13 on ultrasonically welding sheet formations such as pieces of clothing, in particular rainwear, or also technical textiles such as rain protection coverings, tarpaulins etc. is not described in more detail. The bonding aid 15 is schematically shown in the Figures 1 and 3.

A protective and cover strip is indicated with the reference numeral 17 which in the examples according to Figures 1 and 3 by way of suitable means is led up to the periphery of the anvil roller 7 tangentially from above, or directly into the gap between the anvil roller 7 and the subjects 11, 13 and is deposited by these exactly at the desired location on the edge region 19. The width of the cover tape 17 may be a few millimeters so that for example in each case only two millimeters are covered on both sides of the edge 25 of the upper-lying subject 11 which is to be covered. The cover tape 17 may of course also be significantly wider and project more beyond the seam edge (cf. Fig. 4, shown in broken lines). The cover tape 17 on production of the welding or bonding of the two subjects 11, 13, in the clamping gap between the sonotrode roller 3 and the anvil roller 7 is placed onto those surfaces of the subjects 11, 13 which face the tape 17 and is connected by way of the effect of the sonotrode 3 to the surfaces of the subjects 11, 13 with their mutual welding or bonding. I.e. the subjects 11, 13 and the tape or tapes 17 are simultaneously connected to one another and amongst one another.

In Figure 4 it is shown in a schematic and enlarged manner how the cover tape 17 covers the edge region 19 also at the end-face so as to form a textile sheet formation arrangement comprising both subjects 11, 13 and the cover tape 17. Any fibers 27 projecting at the edge region 19 are covered and bonded by way of the cover tape 17. The edge region 19 and the cover tape 17 are pressed together by way of the effect of pressure and heat, so that the thickness of the seam with the cover tape 17 is significantly lower than double the thickness of the subjects 11, 13 and of the cover tape 17. As is further evident from Figure 4, the cover tape 17 may not only be deposited onto the upper side of the connected subjects 11, 13 but also on their lower side. For this a second cover tape 17 is fed to the periphery 23 of the sonotrode roller 3, and likewise during the welding of the two subjects 11, 13 is undetachably connected to their surfaces.

In a preferred design of the invention, the cover tape 17 consists of the same material and the same color as the outer-lying layer 21 of the subjects 11, 13. The cover tape 17 may be transparent, and the color of the outer layer 21 may shine through or complementarily or reflecting colors may be applied in order to optically highlight the seams. The cover tape 17 not only covers unclean subject edges 19; but also the requirements with regard to an exact positioning of the bonding aid 15 between the two subjects 11, 13 may be reduced. Should the bonding aid 15 happen to be pressed out laterally over the edge region 19 on welding or bonding, then it is rendered invisible by the cover tape 17, i.e. it is covered.

With subjects 11, 13 of multi-layer material, a delamination on loading due to friction or washing may be completely prevented with the cover tape 17. The cover tape 17 furthermore increases the waterproofing of the seam, since no water may penetrate into the edge region 19 at the end-face.

The small thickness of the cover tape 17 of for example a few hundredths of millimeters as a result does not increase the thickness of the seam design. By way of the welding, the edges of the cover tape 17 are pressed flatly in a manner such that an almost stepless transition to the subject surface arises.

The cover tape 17 may smooth the wave formation along a welded seam which is often present.

Preferably the cover tape 17 overlaps the subject 13 lying at the bottom more than the object 11 lying at the top by the thickness of the subject. By way of this it is ensured that a sufficiently large contact surface to the subject 11 lying at the bottom is achieved.

## Claims

1. Method for manufacturing a seam connection between two textile sheet formations (11, 13),
comprising the steps
directly before a production of a connection seam, feeding a cover tape (17) at least over one of two edge regions (19) of the overlapping sheet formations (11, 13) such that the cover tape (17) overlaps the at least one edge region (19), and
simultaneously on producing the connection seam, undetachably connecting by way of heat the cover tape (17) to surfaces of the two sheet formations (11, 13) which face the cover tape (17), wherein the connection seam is produced by ultrasonic welding or ultrasonic bonding.

2. A method according to claim 1, wherein the connection seam is produced by ultrasonic welding or ultrasonic bonding in a gap between two rollers (3, 7) which can be pressed against one another.

3. A method according to claim 1 or claim 2, wherein the cover tape (17) is fed over the at least one of the two edge regions (19) of the overlapping sheet formations (11, 13) such that it overlaps the at least one edge region (19) on both sides.

4. A method according to any one of claims 1 - 3, wherein the cover tape (17) is fed to an anvil (7) and/or a sonotrode (3) of an ultrasonic welding device (1) in a tangential manner and is deposited by the sonotrode (3) onto the surfaces of the sheet formations (11, 13) directly before the ultrasonic welding or ultrasonic bonding.

5. A method according to any one of claims 1 - 4, wherein the cover tape (17) is fed such that it overlaps the at least one edge region (19) on a side of the lower-lying sheet formation (13) more than on a side of the upper-lying sheet formation (11).

6. An ultrasonic welding device (1) for manufacturing a seam connection between two textile sheet formations (11, 13), comprising
a sonotrode roller (3) and an anvil roller (7), which may be pressed against one another, and
a feeding device for feeding a cover tape (17) between the anvil roller (7) and the sonotrode roller (3), the feeding device being arranged in front of the anvil roller (7) and the sonotrode roller (3).

7. A device according to claim 6, wherein the feeding device is designed such that it feeds the cover tape (7) tangentially onto a surface of the anvil roller (7) or of the sonotrode roller (3).

8. A textile sheet formation arrangement, comprising
two textile sheet formations (11, 13) being connected to one another by means of an ultrasonic bonding seam connection or an ultrasonic welding seam connection, and
a cover tape (17) overlapping at least one of two overlapping edge regions (19) of the overlapping sheet formations (11, 13) and having been undetachably connected by way of heat to surfaces of two sheet formations (11, 13), which face the cover tape (17).
